# EUROPÄISCHE PATENTANMELDUNG

(11) **EP 4 825 530 A1**
(43) Veröffentlichungstag der Anmeldung: **21.10.2026**
(21) Anmeldenummer: 26166538.4
(22) Anmeldetag: 20.03.2026
(51) Int. Cl.: B24B 13/005, B29D 11/00, G02C 7/02, B24B 41/06

(54) **VORRICHTUNG ZUM BEARBEITEN VON OPTISCHEN ELEMENTEN SOWIE VERFAHREN ZUM BEARBEITEN VON OPTISCHEN ELEMENTEN**

(30) Priorität: 16.04.2025 EP 25170875; 16.04.2025 EP 25170882
(71) Anmelder: Roland Mandler GmbH & Co. KG, 35452 Heuchelheim (DE)
(72) Erfinder: Mandler, Roland, 35452 Heuchelheim (DE)
(74) Vertreter: Knefel, Cordula

(57) **Zusammenfassung**

Die Erfindung betrifft eine Vorrichtung zum Bearbeiten von optischen Elementen, welche ein Gehäuse aufweist, wobei das Gehäuse eine Aufnahme für das optische Element aufweist, bei der im Inneren des Gehäuses eine Stützvorrichtung für das optische Element mit axial beweglichen Stiften vorgesehen ist, bei der für die Stützvorrichtung wenigstens eine Arretiervorrichtung vorgesehen ist, bei der das Gehäuse außerhalb der Stützvorrichtung eine Auflage aufweist, bei der in der Auflage wenigstens eine Öffnung angeordnet ist, und bei der eine Vakuumpumpe vorgesehen ist, die mit der wenigstens einen Öffnung verbunden ist. Die Erfindung betrifft auch ein Verfahren zum Bearbeiten von optischen Elementen.

## Beschreibung

Die Erfindung betrifft eine Vorrichtung zum Bearbeiten von optischen Elementen sowie ein Verfahren zum Bearbeiten von optischen Elementen.

Unter optischen Elementen werden Brillengläser und andere Formkörper mit optisch wirksamen Oberflächen, zum Beispiel Linsen oder Hohlspiegel, verstanden. Es handelt sich vorzugsweise um die Bearbeitung von Brillengläsern.

Zum Stand der Technik (DE 10 2004 016 445 A1) gehört eine Vorrichtung zum Herstellen von Brillengläsern und anderen Formkörpern mit optisch wirksamen Oberflächen. Diese zum Stand der Technik gehörende Vorrichtung weist ein Aufnahmefutter mit einer Spannzange für die optischen Elemente auf. Die Spannzange wird über eine mit Druckluft beaufschlagte Gummimanschette gespannt. Darüber hinaus ist eine Gummimembran vorgesehen, an der das zu bearbeitende optische Element aufliegt. Die Gummimembran geht in einen hohlzylindrischen Körper aus Gummi über, in dem gemäß Variante 3 dieses Standes der Technik Zylinderstifte angeordnet sind, die verschiebbar gelagert sind. Unter dem Einfluss von Druckluft biegt sich eine untere Membran durch und bewegt die Zylinderstifte in Richtung des Brillenglases. Dort drücken sie die obere Membran zur Abstützung an die Unterseite des Brillenglases und sorgen für ein sicheres Anliegen der oberen Membran an dem Brillenglas. Der Druck der Druckluft zum Verschieben der Zylinderstifte wird so gewählt, dass es nicht zu Verbiegungen des Brillenglases kommt, wenn die Zylinderstifte und die obere Membran an diesem abgeformt werden und die Membran dabei die Form eines negativen Abdrucks des Brillenglases annimmt. Wenn die obere Membran in gewünschter Weise an der Unterseite des Brillenglases anliegt, wird die Position der Zylinderstifte fixiert, indem eine Gummimanschette mit Druckluft beaufschlagt wird. Die Gummimanschette dehnt sich aus und arretiert die außenliegenden Zylinderstifte. Das gesamte aus den Zylinderstiften bestehende Paket wird zusammengedrückt und die Zylinderstifte können sich nicht mehr relativ zueinander bewegen. Der Vorteil dieses zum Stand der Technik gehörenden Aufnahmefutters besteht darin, dass die flächige Unterstützung der zentralen Bereiche der Brillengläser möglich ist, ohne dass für jede der vielen verschiedenen Oberflächengeometrien speziell geformte Unterstützungselemente erforderlich sind. Diese zum Stand der Technik gehörende Vorrichtung kann hinsichtlich der Fixierung des Brillenglases jedoch weiter verbessert werden.

Brillengläser und andere Formkörper bestehen vorwiegend aus Kunststoffen, die bei hohem Brechungsindex über ein kleines spezifisches Gewicht verfügen und gut zerspanbar und polierbar sind. Für die Herstellungsverfahren von modernen Brillengläsern und Formkörpern gilt unter anderem folgende wichtige Anforderung: Eine sogenannte Dickenoptimierung muss möglich sein, das heißt die Linse soll so dünn wie möglich sein, damit das Gewicht der Brillengläser und Formkörper minimiert wird. Dies verbessert die Gebrauchseigenschaften aller Geräte, in welche diese optischen Bauteile eingebaut werden, zum Beispiel Brillenferngläser und so weiter. Auf ein geringes Gewicht wird bei Gebrauchsgegenständen heute von den Verbrauchern ganz besonders geachtet.

Dies gilt insbesondere auch für Brillen, bei denen das Gewicht im Wesentlichen von den Brillengläsern abhängt. Leichte Brillengläser aus Kunststoff, die unter Beachtung der Dickenoptimierung hergestellt wurden, tragen daher ganz wesentlich zur Erhöhung des Tragekomforts bei und werden bevorzugt.

Zur sprachlichen Vereinfachung wird nachstehend anstelle von optischen Elementen oder von Brillengläsern und anderen Formkörpern mit optisch wirksamen Oberflächen nur noch von Brillengläsern oder Brillenglasrohlingen gesprochen. Gemeint sind aber immer auch "andere Formkörper mit optisch wirksamen Oberflächen" oder "andere optische Elemente mit optisch wirksamen Oberflächen".

Da die optischen Eigenschaften von Brillengläsern von ihren beiden gekrümmten Oberflächen und deren Abstand bestimmt werden, kann dieser größer oder kleiner ausgeführt werden, ohne dass sich die optischen Eigenschaften des Brillenglases verändern, wenn die Oberflächengeometrien entsprechend angepasst werden. Von diesen physikalischen Gegebenheiten wird bei der Dickenoptimierung Gebrauch gemacht. Die Oberflächengeometrien werden so berechnet, dass bei möglichst dünnem Brillenglas die geforderten optischen Eigenschaften gegeben sind.

Bei Plusgläsern, bei denen die Linsenmitte dicker als der Linsenrand ist, und bei Neutralgläsern, bei denen die Linsenmitte gleich dick ist wie der Linsenrand, wird bei der Dickenoptimierung die Dicke der Linsen so weit reduziert, wie dies im Hinblick auf die verbleibende Randdicke möglich ist. Die Randdicke ist die Dicke am Umfangsrand des fertigen Brillenglases. Die Randdicke muss eingehalten werden, damit die Linse in der Brillenfassung einwandfrei montiert werden kann, das heißt, diese Dicke muss in etwa der Breite des Rahmens der Brillenfassung entsprechen.

Bei Minusgläsern, bei denen die Linsenmitte dünner ist als der Linsenrand, wird im Rahmen der Dickenoptimierung die Dicke der Linsen so weit reduziert, wie dies im Hinblick auf die verbleibende Restdicke in der Linsenmitte möglich ist. Eine gewisse Mindestdicke in der Linsenmitte ist erforderlich, damit die mechanische Stabilität des Brillenglases nicht unzulässig abnimmt.

Bei der Herstellung von Brillengläsern unter Beachtung der vorgenannten Dickenoptimierung ergibt sich folgendes Problem: Durch die Dickenoptimierung, das heißt, das Brillenglas soll so dünn wie möglich sein, und durch die verwendeten Kunststoffe als Linsenmaterial, die eine geringe Festigkeit aufweisen, werden die erzeugten Brillengläser während der spannehmenden Fertigung zunehmend instabiler. In dem Maße, wie sie durch den Materialabtrag dünner werden, verlieren sie an Stabilität und weichen dem Druck der Bearbeitungswerkzeuge aus, was zu unerwünschten Veränderungen der Oberflächengeometrie führt. In diesem Zusammenhang müssen Spannwerkzeuge und Verfahren gefunden werden, die der genannten Instabilität entgegenwirken.

Eine derartige Vorrichtung ist die oben genannte Vorrichtung gemäß der DE 10 2004 016 445 A1.

Weiterhin gehört zum Stand der Technik (DE 10 2023 110 130 A1) eine Aufnahme für die Bearbeitung von optischen Werkstücken, insbesondere Brillenlinsen.

Diese zum Stand der Technik gehörende Vorrichtung verzichtet auf eine Spannzange, um ein Verformen des Brillenglasrohlings durch das Spannen in der Spannzange zu vermeiden. Diese zum Stand der Technik gehörende Vorrichtung beansprucht eine Halteanordnung mit dem Wirkprinzip "Vakuum". Bei dieser zum Stand der Technik gehörenden Vorrichtung weist die Membran, auf der die Linse aufliegt, eine Perforation auf. In der Kammer, die durch die Membran und weitere Bauteile gebildet wird, wird ein Vakuum angelegt. Dieses angelegte Vakuum wirkt über die Perforation auf der Außenseite eines Aufnahmeabschnitts der Membran, um die zu bearbeitende Brillenlinse zu halten. Diese zum Stand der Technik gehörende Vorrichtung weist den Nachteil auf, dass das Vakuum in dem Raum, in dem die Zylinderstifte angeordnet sind, erzeugt wird. Die Perforation in der Membran ist anfällig bei der großen mechanischen Belastung, die durch das Erzeugen des Unterdrucks und das Ansaugen der Brillenlinse entsteht. Darüber hinaus kann durch diese Perforation Schleifmittel oder Kühlmittel oder ein anderes flüssiges Bearbeitungsmittel in den Raum, in dem die Zylinderstifte angeordnet sind und in dem der Unterdruck erzeugt wird, gelangen, wodurch die gesamte Vorrichtung unbrauchbar wird.

Das der Erfindung zugrunde liegende technische Problem besteht darin, eine Vorrichtung zum Bearbeiten von optischen Elementen mit optisch wirksamen Oberflächen anzugeben, welche einerseits die Verwendung einer Spannzange vermeidet und welche andererseits robust im Aufbau und dem Betrieb ist. Darüber hinaus soll ein Verfahren zum Bearbeiten von optischen Elementen mit einer Vorrichtung angegeben werden, mit dem das optische Element sicher und spannungsfrei gehalten werden kann.

Dieses technische Problem wird durch eine Vorrichtung mit den Merkmalen gemäß Anspruch 1 und durch ein Verfahren mit den Merkmalen gemäß Anspruch 13 gelöst.

Die erfindungsgemäße Vorrichtung zum Bearbeiten von optischen Elementen mit optisch wirksamen Oberflächen, welche ein Gehäuse mit einer Aufnahme für die optischen Elemente aufweist, wobei das Gehäuse in einem oberen Teil die Aufnahme für das optische Element aufweist und in einem unteren Teil eine Vorrichtung zur Befestigung an einer Werkstückspindel einer Bearbeitungsvorrichtung, bei der im Inneren des Gehäuses eine Stützvorrichtung für das optische Element mit axial beweglichen Stiften vorgesehen ist, bei der für die Stützvorrichtung wenigstens eine Arretiervorrichtung vorgesehen ist, zeichnet sich dadurch aus, dass das Gehäuse in dem oberen Teil außerhalb der Stützvorrichtung eine Auflage aufweist, dass in der Auflage wenigstens eine Öffnung angeordnet ist, und dass eine Vakuumpumpe vorgesehen ist, die mit der wenigstens einen Öffnung verbunden ist.

Die erfindungsgemäße Vorrichtung weist den Vorteil auf, dass in dem Gehäuse in der Auflage wenigstens eine Öffnung angeordnet ist, über die ein Unterdruck erzeugbar ist.

Ein Teil des optischen Elements liegt an oder in der Auflage. Das optische Element steht mit dieser Auflage formschlüssig in Verbindung, so dass durch das Erzeugen des Unterdrucks das optische Element an der Auflage gehalten wird.

Die erfindungsgemäße Vorrichtung weist den Vorteil auf, dass zum Halten des optischen Elements ein lediglich an der Auflage anliegendes Vakuum verwendet wird. Das optische Element liegt damit zum einen an der Auflage an und wird durch Unterdruck gehalten und zum anderen liegt das optische Element an der Stützvorrichtung an und wird an die Form des optischen Elements angepasst gestützt.

Außerhalb der Stützvorrichtung ist die Auflage vorgesehen, auf der das optische Element vorzugsweise mit einem radial äußeren Teil anliegt. Durch die Erzeugung des Unterdrucks in der Auflage wird das optische Element spannungsfrei an der Aufnahmevorrichtung fixiert.

Die Aufnahme für das optische Element weist die Stützvorrichtung auf sowie eine radial außerhalb der Stützvorrichtung angeordnete Auflage.

Gemäß einer vorteilhaften Ausführungsform der Erfindung ist die Auflage als Auflage für einen radial äußeren Teil des optischen Elements ausgebildet.

Der radial äußere Teil des optischen Elements kann beispielsweise ein Haltering sein, der an dem optischen Element, beispielsweise einem Brillenglasrohling, angeordnet ist.

Der Haltering weist vorteilhaft eine standardisierte Form und vorteilhaft einen standardisierten Durchmesser auf, so dass die Auflage für eine Vielzahl von Brillenglasrohlingen oder für sämtliche zu bearbeitenden Brillenglasrohlinge gleich ausgebildet sein kann.

Wichtig ist, dass der radial äußere Teil des optischen Elements formschlüssig an der Auflage anliegt, so dass durch Erzeugen eines Unterdrucks im Bereich der Auflage das optische Element an der Auflage fixiert wird.

Gemäß einer besonders bevorzugten Ausführungsform der Erfindung kann die Auflage als eine Auflage für einen Haltering des optischen Elements ausgebildet sein.

Das optische Element kann einen an dem optischen Element, beispielsweise einem Brillenglasrohling, fest angeordneten Haltering bestehen. Es kann auch ein lösbarer Haltering vorgesehen sein. In diesem Fall ist das optische Element, beispielsweise der Brillenglasrohling, in dem Haltering lösbar angeordnet.

Gemäß einer vorteilhaften Ausführungsform der Erfindung ist die Auflage als formschlüssige Aufnahme für den radial äußeren Teil des optischen Elements ausgebildet. Diese Ausführung weist den Vorteil auf, dass zwischen der Auflage und dem radial äußeren Teil des optischen Elements der Unterdruck erzeugt werden kann, so dass das optische Element mit dem radial äußeren Teil an der Aufnahme fixiert werden kann.

Die Auflage weist vorteilhaft wenigstens eine Öffnung, besonders vorteilhaft mehrere Öffnungen, auf. Die Öffnungen stehen mit einer Vorrichtung zur Erzeugung eines Unterdrucks, das heißt mit einer Vakuumpumpe, in Verbindung. Über die Vakuumpumpe und über Bohrungen, die zu den Öffnungen führen, wird im Bereich der Öffnungen ein Unterdruck erzeugt.

Gemäß einer besonders bevorzugten Ausführungsform der Erfindung sind mehrere Öffnungen über den Umfang der Aufnahme vorteilhaft gleichmäßig verteilt angeordnet. Hierdurch wird eine spannungsfreie Fixierung des optischen Elements an der Auflage erzeugt.

Eine weitere vorteilhafte Ausführungsform der Erfindung sieht vor, dass die Auflage für das optische Element eine zusätzliche Gummi- oder Kunststoffauflage aufweist.

Die Auflage ist an dem Gehäuse der erfindungsgemäßen Vorrichtung angeordnet. Diese Auflage stellt vorzugsweise eine schulterförmige Auflage dar. Da die Gehäuse üblicherweise aus Metall oder einem anderen harten Material bestehen, ist vorteilhaft eine zusätzliche Gummi- oder Kunststoffauflage vorgesehen, damit die optischen Elemente spannungsfrei an der Auflage angeordnet werden können. Die Gummiauflage verhindert auch ein Verkratzen des optischen Elements.

Gemäß einer weiteren vorteilhaften Ausführungsform der Erfindung ist vorgesehen, dass die Stützvorrichtung ein elastisches Formteil aufweist, in dem mehrere Zylinderstifte angeordnet sind, dass das elastische Formteil eine obere Membran und einen mit der oberen Membran verbundenen Hohlzylinder aufweist, dass die Zylinderstifte in dem Hohlzylinder angeordnet sind, dass die Zylinderstifte in Richtung der Aufnahme für das optische Element ein oberes Ende und ein unteres Ende aufweisen, dass die unteren Enden der Zylinderstifte an einer unteren Membran der Stützvorrichtung anliegend angeordnet sind, dass radial um den Hohlzylinder des elastischen Formteils herum eine elastische Manschette als Arretiervorrichtung angeordnet ist, welche mit einer Zuführungseinrichtung für ein Druckmittel verbunden ist, und dass die untere Membran auf einer in dem Gehäuse angeordneten Federvorrichtung angeordnet ist.

Diese Ausführungsform weist den Vorteil auf, dass die Zylinderstifte in einem von dem elastischen Formteil gebildeten Raum, der durch die obere Membran und dem Hohlzylinder und einer unteren Membran begrenzt wird, angeordnet sind. In diesen Hohlraum kann kein Arbeitsmittel, wie beispielsweise ein Poliermittel, eindringen. Der Hohlzylinder und die untere Membran liegen mit ringförmigen Flanschen aneinander und werden durch das Verschrauben des oberen Gehäuseteils mit dem unteren Gehäuseteil verpresst und damit luft- und fluiddicht verbunden.

Das elastische Formteil oder die elastische Manschette bestehen vorteilhaft aus Gummi, so dass ein Gummiformteil oder eine Gummimanschette vorhanden sind. Es kann jedoch auch ein elastischer Kunststoff verwendet werden.

Durch die axialbeweglichen Zylinderstifte wird die Form des in der Vorrichtung angeordneten optischen Elements durch die Zylinderstifte als Negativabdruck abgebildet. Ist die Form abgebildet, werden die Zylinderstifte mit der Arretiervorrichtung arretiert. Hierzu wird die elastische Manschette mit einem Druckmittel, vorteilhaft mit Druckluft, beaufschlagt. Es kann auch eine Beaufschlagung mit einem anderen Druckmittel, beispielsweise einer Flüssigkeit, erfolgen.

Die elastische Manschette legt sich an den Hohlzylinder an, der wiederum die äußeren Zylinderstifte durch Kontakt mit den Zylinderstiften fixiert. Durch den von der elastischen Manschette ausgeübten Druck werden auch die innen liegenden Zylinderstifte fixiert. Hierdurch wird eine an die Form des optischen Elements angepasste Auflagefläche der oberen Membran erzeugt. Das optische Element kann nunmehr bearbeitet werden, ohne dass Durchbiegungen oder dergleichen auftreten.

Gemäß einer weiteren vorteilhaften Ausführungsform der Erfindung ist vorgesehen, dass die Federvorrichtung als Elastomer ausgebildet ist.

Die Federvorrichtung ist an der unteren Membran anliegend angeordnet. Werden beim Einlegen des optischen Elements in die Aufnahme die Zylinderstifte in Richtung der unteren Membran bewegt, erzeugt die untere Membran durch die Federvorrichtung, das heißt vorteilhaft das Elastomer, einen Gegendruck. Der Druck ist so gewählt, dass das optische Element die Zylinderstifte in Richtung des Elastomers drückt. Ist das optische Element durch Erzeugen des Unterdrucks in der Auflage und damit in der Aufnahme fixiert, werden die Zylinderstifte durch die elastische Manschette fixiert und der Bearbeitungsvorgang kann beginnen.

Da der Brillenglasrohling vor dem Bearbeiten eine größere Eigenstabilität aufweist als nach dem Bearbeiten, da während des Bearbeitungsvorgangs Material abgetragen wird und damit die Dicke des Brillenglasrohlings reduziert wird, kann mit dem unbearbeiteten Brillenglasrohling eine Verschiebung der Zylinderstifte entgegen der Druckkraft der Membranen und der Federvorrichtung durchgeführt werden. Der Negativabdruck der Rückseite des Brillenglasrohlings wird damit durch die Zylinderstifte erzeugt.

Die Bearbeitungsvorgänge sind Fräsen, Drehen, Schleifen, Feinschleifen und/oder gegebenenfalls Polieren.

Nach Entfernen des bearbeiteten optischen Elements wird die Druckbeaufschlagung der elastischen Manschette gestoppt, so dass die Zylinderstifte aufgrund des von der Federvorrichtung ausgeübten Drucks sich in eine Neutrallage verschieben.

Gemäß einer weiteren vorteilhaften Ausführungsform der Erfindung ist vorgesehen, dass die Federvorrichtung über eine gesamte radiale Ausdehnung ein konstantes Elastizitätsmodul aufweist, oder dass die Federvorrichtung in radialer Richtung unterschiedliche Elastizitätsmodule aufweist.

Die Federvorrichtung, vorteilhaft das Elastomer, weist in einer einfachen Ausführungsform ein konstantes Elastizitätsmodul über die gesamte radiale Ausdehnung auf. Das bedeutet, dass das Elastizitätsmodul in der Mitte der Federvorrichtung und am Rand der Federvorrichtung gleich ist.

Gemäß einer anderen vorteilhaften Ausführungsform weist die Federvorrichtung, vorteilhaft das Elastomer, in radialer Richtung unterschiedliche Elastizitätsmodule auf. Die Federvorrichtung kann in der Mitte ein erstes Elastizitätsmodul aufweisen und am Rand ein größeres Elastizitätsmodul als in der Mitte.

In diesem Ausführungsbeispiel ist die Federvorrichtung, vorteilhaft das Elastomer, in der Mitte weicher als am Rand.

Die Federvorrichtung kann in einer anderen Ausführungsform in der Mitte ein erstes Elastizitätsmodul aufweisen und am Rand ein kleineres Elastizitätsmodul als in der Mitte.

Die gesamte Federvorrichtung kann eine gleichbleibende Härte aufweisen. Die Härte der Federvorrichtung kann jedoch auch variieren.

Die Federvorrichtung weist vorteilhaft mindestens zwei Bereiche verschiedener Härte auf. Die Federvorrichtung kann aus verschiedenen Segmenten unterschiedlicher Härte bestehen.

Es besteht auch die Möglichkeit, dass die Federvorrichtung, vorzugsweise das Elastomer, einstückig mit mindestens zwei unterschiedlichen Härtebereichen ausgebildet ist.

Gemäß einer vorteilhaften Ausführungsform der Erfindung ist das Elastomer als in einem 3D-Druck hergestelltes Elastomer ausgebildet.

Die Struktur des Elastomers ist vorteilhaft an den zu bearbeitenden Brillenglasrohling angepasst ausgebildet.

Gemäß einer weiteren vorteilhaften Ausführungsform der Erfindung sind die Zylinderstifte mit ihrem oberen Ende an der oberen Membran des elastischen Formteils angeordnet.

Die Zylinderstifte liegen vorteilhaft an der oberen Membran an, um die Form des optischen Elements mit der oberen Membran abzubilden.

Eine weitere vorteilhafte Ausführungsform der Erfindung sieht vor, dass die elastische Manschette in einer innen liegenden Ausnehmung des Gehäuses angeordnet ist. Die elastische Manschette ist derart in der Ausnehmung angeordnet, dass sie bei Druckbeaufschlagung mit einem Druckmittel den Hohlzylinder in Richtung einer Mittenachse der Vorrichtung drückt und dadurch die Zylinderstifte zueinander fixiert.

Gemäß einer weiteren vorteilhaften Ausführungsform ist vorgesehen, dass in der oberen Membran ein Gewebe angeordnet ist.

Das Gewebe ist vorteilhaft aus Kunststoff oder Metall gebildet. Besonders vorteilhaft kann das Gewebe als Drahtgeflecht ausgebildet sein.

Diese Ausführungsform weist den Vorteil auf, dass die obere Membran durch das Gewebe steifer ausgebildet ist gegenüber der Membran ohne Gewebe.

Durch die Versteifung wird die Kraft, die von den Zylinderstiften ausgeübt wird, gleichmäßiger von der Membran auf den Brillenglasrohling übertragen. Die Übertragung der Kraft ist flächenförmiger an Stelle einer punktförmigen Kraftübertragung.

Gemäß einer weiteren vorteilhaften Ausführungsform der Erfindung ist vorgesehen, dass das Gehäuse aus einem oberen Gehäuseteil und einem unteren Gehäuseteil gebildet ist, dass beide Gehäuseteile mittels einer Schraubverbindung miteinander verbunden sind, dass in dem Gehäuse Bohrungen für die Erzeugung eines Unterdrucks in der Auflage für das optische Element vorgesehen sind, und dass in dem Gehäuse Bohrungen für die Erzeugung eines Überdrucks für die Arretiervorrichtung vorgesehen sind.

Damit die Zylinderstifte und das elastische Formteil in dem Gehäuse angeordnet werden können, ist das Gehäuse vorteilhaft zweiteilig ausgebildet. Zwischen dem unteren und dem oberen Gehäuseteil sind vorteilhafte ringförmige Flansche des Hohlzylinders und der untere Membran geklemmt, so dass diese formschlüssig aneinander liegen.

In dem Gehäuse ist vorteilhaft wenigstens eine Bohrung für die Verbindung der Öffnungen in der Auflage zu der Vakuumpumpe vorgesehen, um in der Auflage einen Unterdruck erzeugen zu können. Darüber hinaus sind vorteilhaft zusätzliche Bohrungen vorgesehen, um mit einem Druckmittel einen Überdruck in der elastischen Manschette zu erzeugen.

Das erfindungsgemäße Verfahren zum Bearbeiten von optischen Elementen mit der erfindungsgemäßen Vorrichtung zeichnet sich dadurch aus,
- dass das optische Element auf der oberen Membran angeordnet wird,
- dass die Zylinderstifte der Stützvorrichtung die Membran aufgrund der Federvorrichtung an das optische Element drücken,
- dass die Zylinderstifte der Stützvorrichtung mit der Arretiervorrichtung durch Aufbringen von Druck auf die elastische Manschette fixiert werden,
- dass in der wenigstens einen Öffnung der Auflage durch die Vakuumpumpe ein Unterdruck erzeugt wird, und
- dass das optische Element bearbeitet wird.

Die Schritte,
- dass die Zylinderstifte der Stützvorrichtung mit der Arretiervorrichtung durch Aufbringen von Druck auf die elastische Manschette fixiert werden,
- dass in der wenigstens einen Öffnung der Auflage durch die Vakuumpumpe ein Unterdruck erzeugt wird, können in der Reihenfolge vertauscht werden.

Gemäß einer weiteren vorteilhaften Ausführungsform der Erfindung ist vorgesehen, dass das optische Element als Brillenglasrohling ausgebildet ist, der aus einem Linsenelement und einer Ringhalterung gebildet ist, bei dem das Linsenelement und die Ringhalterung aus demselben Material gebildet sind, bei dem zwischen dem Linsenelement und der Ringhalterung eine das Linsenelement in radialer Richtung begrenzende Ringfläche mit einer Höhe ausgebildet ist, und dass die Ringhalterung eine Dicke aufweist, die wenigstens teilweise kleiner ist als die Höhe der Ringfläche.

Brillenglasrohlinge werden üblicherweise aus Kunststoff gegossen.

Grundsätzlich kann der Brillenglasrohling alternativ aus Glas bestehen.

Der bei dem Verfahren eingesetzte Brillenglasrohling weist vorteilhaft ein Linsenelement auf und eine Ringhalterung. Vorteilhaft umgibt die Ringhalterung das Linsenelement. Besonders vorteilhaft ist die Ringhalterung konzentrisch um das Linsenelement herum angeordnet.

Das Linsenelement und die Ringhalterung, das heißt der gesamte Brillenglasrohling, bestehen vorteilhaft aus ein und demselben Material.

Damit der Brillenglasrohling preiswert aufgebaut ist, ist die Dicke der Ringhalterung wenigstens teilweise kleiner als die Höhe der das Linsenelement in radialer Richtung begrenzende Ringfläche des Brillenglasrohlings.

Der Brillenglasrohling ist vorteilhaft aus dem Linsenelement und der Ringhalterung gebildet. Linsenelement und Ringhalterung bestehen vorteilhaft aus demselben Material.

Es wird bei diesem Brillenglasrohling keine Unterscheidung zwischen einem preiswerten Material für eine Ringhalterung und einem teuren Material für das Linsenelement gemacht.

Zwischen dem Linsenelement und der Ringhalterung ist eine Ringfläche gebildet. Es handelt sich hierbei um eine fiktive Ringfläche in dem Brillenglasrohling, da Linsenelement und Ringhalterung aus ein und demselben Material bestehen. Diese Ringfläche wird zu einer Außenfläche in radialer Richtung des Brillenglasrohlings, wenn die Ringhalterung nach den verschiedenen Bearbeitungsschritten des Linsenelements entfernt wird.

Diese Ringfläche weist eine Höhe auf. Die Höhe der Ringfläche ist in axialer Richtung des Brillenglasrohlings ausgerichtet.

Vorteilhaft weist die Ringhalterung eine Dicke auf, die wenigstens teilweise kleiner ist als die Höhe der Ringfläche.

Durch diese vorteilhafte Ausbildung des Brillenglasrohlings kann im Bereich der Ringhalterung erheblich Material eingespart werden. Da die Ringhalterung und das Linsenelement aus ein und demselben Material bestehen, wird die Herstellung des Brillenglasrohlings vereinfacht, da das Linsenelement und die Ringhalterung in einem Arbeitsschritt, das heißt beispielsweise in einem Gießvorgang, ausgebildet werden können. Es besteht alternativ auch die Möglichkeit, erst das Linsenelement zu gießen und die Ringhalterung anzugießen.

Gerade im Bereich der Ringhalterung kann erheblich Material eingespart werden, da die Ringhalterung wenigstens teilweise eine geringere Dicke aufweist.

Die Ringhalterung hat die Funktion, die Brillenglasrohlinge während der verschiedenen Bearbeitungsvorgänge in der Auflage zu halten.

Der Brillenglasrohling ist vorteilhaft ein halb- oder vorgeformter Brillenglasrohling mit optisch wirksamer Fläche auf einer Seite, dessen zweite Fläche durch Fräsen, Drehen, Schleifen, Feinschleifen und/oder gegebenenfalls Polieren bearbeitet wird.

Grundsätzlich kann auch ein Brillenglasrohling verwendet werden, der auf beiden Seiten bearbeitet wird.

Nach dem Bearbeiten des Linsenelements in dem Brillenglasrohling werden Randbearbeitungsschritte durchgeführt, bei denen die Ringhalterung entfernt wird, um auf den Fertigdurchmesser des herzustellenden Brillenglases zu gelangen.

Anschließend können noch Beschichtungsprozesse, wie Hardcoating oder Antireflex, durchgeführt werden.

Da die Ringhalterung nach den verschiedenen Bearbeitungsschritten ohnehin entfernt wird, besteht die Möglichkeit, diese Ringhalterung bei dem vorteilhaft verwendeten Brillenglasrohling so dünn wie möglich auszugestalten, um Material einzusparen.

Mit dem vorteilhaften Brillenglasrohling können pro Jahr 30.000 Tonnen Material eingespart werden.

Besonders vorteilhaft ist vorgesehen, dass der Brillenglasrohling mit der Ringhalterung und dem Linsenelement als gegossener Brillenglasrohling ausgebildet ist.

Gemäß einer vorteilhaften Ausführungsform der Erfindung ist vorgesehen, dass der Brillenglasrohling mit der Ringhalterung und dem Linsenelement als gegossener Brillenglasrohling und/oder als einstückiger Brillenglasrohling ausgebildet ist.

Der Brillenglasrohling wird vorteilhaft als gegossener Brillenglasrohling ausgebildet. Hierdurch kann der Brillenglasrohling mit der Ringhalterung und dem Linsenelement besonders einfach und preiswert hergestellt werden.

Besonders vorteilhaft ist die Ringhalterung mit der wenigstens teilweise geringeren Dicke als die Höhe der Ringfläche unmittelbar bei dem Gießvorgang mit ausgebildet.

Ist der Brillenglasrohling vorteilhaft einstückig ausgebildet, werden Arbeitsschritte durch das Angießen oder anderweitige Befestigen einer Ringhalterung vermieden.

Gemäß einer weiteren vorteilhaften Ausführungsform ist vorgesehen, dass der Brillenglasrohling mit dem Linsenelement und der Ringhalterung als ein in einem Gießvorgang gegossener Brillenglasrohling ausgebildet ist.

Durch diese Ausführungsform werden Arbeitsschritte eingespart. Der Brillenglasrohling mit dem Linsenelement und der Ringhalterung wird in einem einzigen Gießvorgang hergestellt, nämlich gegossen.

Hierdurch werden Spannungen zwischen dem Linsenelement und der Ringhalterung ebenfalls vermieden.

Eine weitere vorteilhafte Ausführungsform der Erfindung sieht vor, dass die Dicke der Ringhalterung über eine gesamte radiale Erstreckung der Ringhalterung kleiner ist als die Höhe der Ringfläche zwischen dem Linsenelement und der Ringhalterung, und/oder dass die Ringhalterung als Flansch ausgebildet ist.

Durch diese Ausführungsform wird besonders viel Material eingespart.

Die Ringhalterung weist vorteilhaft eine Dicke auf, die eine stabile Halterung des Brillenglasrohlings während der verschiedenen Bearbeitungsprozesse gewährleistet. Für die stabile Halterung ist vorteilhaft eine vorgegebene Mindestranddicke der Ringhalterung vorgesehen. Der Brillenglasrohling wird vorteilhaft mit der Ringhalterung in der erfindungsgemäßen Vorrichtung in der Auflage durch Unterdruck fixiert.

Die größte Ersparnis wird erzielt, wenn die Ringhalterung vorteilhaft in ihrer gesamten radialen Ausdehnung um die Längsachse des Brillenglasrohlings eine Dicke aufweist, die kleiner ist als die Höhe der Ringfläche zwischen dem Linsenelement und der Ringhalterung.

Gemäß der weiteren vorteilhaften Ausführungsform ist vorgesehen, dass die Ringhalterung als Flansch ausgebildet ist.

Der Flansch ist vorteilhaft einstückig mit dem Linsenelement in dem Gießvorgang ausgebildet.

Grundsätzlich besteht auch die Möglichkeit, den Flansch nachträglich anzugießen.

Die Ausbildung als Flansch weist den Vorteil auf, dass eine besonders große Materialersparnis erzielt wird. Es ist in diesem Fall nicht so viel "Opfermaterial" vorhanden.

Gemäß einer weiteren vorteilhaften Ausführungsform ist vorgesehen, dass der Flansch als planparalleler oder als sich einseitig verjüngender Flansch oder als sich beidseitig verjüngender Flansch ausgebildet ist.

Diese Ausführungsformen weisen den Vorteil auf, dass der Flansch plane Auflageflächen für eine Spannvorrichtung in einer Bearbeitungsvorrichtung aufweist. Der Flansch kann sich alternativ in Richtung des Linsenelements oder in Richtung des Randes verjüngen. Die Verjüngung kann auf einer Seite des Flansches vorgesehen sein. Die Verjüngung kann alternativ auf beiden Seiten des Flansches vorgesehen sein. Ist die Verjüngung auf beiden Seiten des Flansches vorgesehen, verjüngt sich der Flansch vorteilhaft zu einem Außendurchmesser des Brillenglasrohlings hin.

Gemäß einer weiteren vorteilhaften Ausführungsform ist vorgesehen, dass die Ringhalterung auf wenigstens einer Seite wenigstens eine Einbuchtung aufweist, oder dass auf einer oder beiden Seiten des Brillenglasrohlings zwischen dem Linsenelement und der Ringhalterung ein Radius ausgebildet ist, oder dass auf einer oder beiden Seiten des Brillenglasrohlings zwischen dem Linsenelement und der Ringhalterung eine Kante ausgebildet ist.

Es kann vorteilhaft zwischen dem Linsenelement und der Ringhalterung ein weicher Übergang vorgesehen sein.

Durch die wenigstens eine Einbuchtung wird eine Materialersparnis erzielt.

Handelt es sich um einen Brillenglasrohling, der eine vorgefertigte Seite aufweist, ist die Einbuchtung besonders vorteilhaft auf der vorgefertigten Seite ausgebildet. Die Einbuchtung wird beim Gießvorgang unmittelbar in der Ringhalterung mit ausgebildet.

Grundsätzlich besteht auch die Möglichkeit, dass die Ringhalterung auf beiden Seiten wenigstens eine Einbuchtung aufweist. Hierdurch wird eine noch größere Materialersparnis erzielt.

Wesentlich an dem vorteilhaften Brillenglasrohling ist, dass die Einbuchtung unmittelbar beim Herstellvorgang des Brillenglasrohlings ausgebildet wird.

Die Einbuchtung wird nicht durch nachträgliche Fräs- oder Bearbeitungsvorgänge ausgebildet. Hierdurch würde sich keine Materialersparnis ergeben.

Ein weicher Übergang ist keine Kante oder dergleichen.

Diese Ausführungsform mit einem weichen Übergang kann bei verschiedenen Bearbeitungsvorgängen von Vorteil sein, da der Brillenglasrohling bis zum Rand des Linsenelements oder über den Rand des Linsenelements hinaus in Richtung Ringhalterung bearbeitet werden kann.

Gemäß einer anderen vorteilhaften Ausführungsform der Erfindung ist vorgesehen, dass auf einer oder beiden Seiten des Brillenglasrohlings zwischen dem Linsenelement und der Ringhalterung eine Kante ausgebildet ist.

Die Ausbildung mit der Kante kann ebenfalls bei verschiedenen Bearbeitungsvorgängen von Vorteil sein. Insbesondere definiert eine Kante das Fertigmaß des Linsenelements, vorteilhaft zuzüglich eines Bearbeitungsmaßes, um das Linsenelement später in einer Brillenfassung einpassen zu können.

Gemäß einer weiteren vorteilhaften Ausführungsform ist vorgesehen, dass auf einer Seite des Brillenglasrohlings zwischen dem Linsenelement und der Ringhalterung ein Radius ausgebildet ist und dass auf der gegenüberliegenden Seite des Brillenglasrohlings zwischen dem Linsenelement und der Ringhalterung eine Kante ausgebildet ist.

Diese Ausführungsform kann ebenfalls bei verschiedenen Bearbeitungsvorgängen von besonderem Vorteil sein. Auch bei dieser Ausführungsform ist die Begrenzung des Linsenelements in Bezug auf das Fertigmaß sichtbar.

Eine weitere vorteilhafte Ausführungsform sieht vor, dass die Ringhalterung parallel oder im Winkel zu einer Horizontalen des Brillenglasrohlings angeordnet ist. Diese Ausführungsform ist besonders vorteilhaft bei der Ausbildung der Ringhalterung als Flansch. Der Brillenglasrohling ist vorteilhaft scheibenförmig ausgebildet. Durch die Scheibe ist eine Horizontale festgelegt.

Die Ringhalterung ist vorteilhaft parallel zu der Horizontalen ausgerichtet. Es besteht auch alternativ die Möglichkeit, die Ringhalterung in einem Winkel zu der Horizontalen auszurichten.

Gemäß dieser Ausführungsform ist die Auflage an den Winkel der Ringhalterung angepasst.

Gemäß einer weiteren vorteilhaften Ausführungsform weist der Brillenglasrohling zwei Flächen auf und die erste Fläche des Brillenglasrohlings ist als zu bearbeitende Fläche ausgebildet.

Brillenglasrohlinge werden häufig als vorgefertigte Brillenglasrohlinge ausgebildet. Hierbei weist eine Seite schon aufgrund des Gießvorgangs die erforderlichen optischen Eigenschaften auf. Es wird lediglich noch die zweite Seite bearbeitet. Hierdurch wird Bearbeitungszeit eingespart.

Ist eine vorgefertigte Seite vorhanden, ist die Einbuchtung vorzugsweise auf der vorgefertigten Seite angeordnet.

Gemäß einer vorteilhaften Ausführungsform weist die Einbuchtung einen Radius auf. Das bedeutet, dass es sich um eine im Querschnitt teilkreisförmige Einbuchtung handelt. Die Einbuchtung kann alternativ eine im Querschnitt kurvenförmige Einbuchtung sein. Es handelt sich dann im Querschnitt um eine parabelförmige oder ellipsenförmige Einbuchtung.

Besonders vorteilhaft ist vorgesehen, dass eine kurvenförmige Einbuchtung vorgesehen ist, wenn auf der gegenüberliegenden Seite ein weicher Übergang zwischen dem Linsenelement und der Ringhalterung vorgesehen ist.

Ist die Ringhalterung als plane Ringhalterung, beispielsweise in Form eines Flansches, ausgeführt, ist vorteilhaft zwischen dem Linsenelement und der Ringhalterung eine Kante vorgesehen. In diesem Fall erkennt man den Rand des Linsenelements, das heißt des späteren Brillenglases.

Gemäß einer weiteren vorteilhaften Ausführungsform der Erfindung steht das Linsenelement, das heißt das Funktionsglas, über dem Rohling vor.

Gemäß einer vorteilhaften Ausführungsform besteht die Möglichkeit, dass auf beiden Seiten eine angegossene Einbuchtung vorgesehen ist.

Gemäß einer weiteren vorteilhaften Ausführungsform weist der Rand des Brillenglasrohlings eine Dicke von 1,1 bis 1,5 Millimetern auf. Vorzugsweise ist eine Dicke von 1,2 Millimetern vorgesehen.

Weist die Ringhalterung auf einer Seite eine Einbuchtung oder auf beiden Seiten jeweils eine Einbuchtung auf, ist der Rand der Ringhalterung dicker ausgebildet als die Dicke der Ringhalterung im Bereich der einen oder der beiden Einbuchtungen.

Gemäß der vorteilhaften Ausführungsform mit einer Einbuchtung auf einer Seite oder mit je einer Einbuchtung auf jeder Seite ist der Rand der Ringhalterung dicker als die schmalste Stelle der Ringhalterung. Hierdurch werden besonders gute Halteeigenschaften in den verschiedenen Bearbeitungsvorrichtungen erreicht.

Bei dem vorteilhaften Brillenglasrohling sind vorteilhaft zwei Flächen für die Ausbildung der optischen Wirkung vorgesehen. Eine der Flächen ist die sogenannte "Rezeptfläche". Diese Fläche wird bearbeitet. Um die Wirtschaftlichkeit zu erhöhen, wird vorteilhaft nur die Seite an dem Brillenglasrohling bearbeitet, die später auch tatsächlich als Brillenglas benötigt wird. Die andere Seite an dem Brillenglasrohling ist bereits fertiggestellt.

Das Zusammenwirken der optischen Eigenschaften von Vorder- und Rückseite ergibt ein Brillenglas mit idealer Anpassung an das Rezept eines Augenarztes (Rezeptfertigung).

Die Spezialgeometrie der Vorderseite (Rezeptfläche) wird vorteilhaft so gestaltet, dass die Gesamtwirkung des Brillenglases von vorne gesehen auch ästhetischen Gesichtspunkten gerecht wird. Das bedeutet zum Beispiel, dass keine verzerrten Abbildungseigenschaften bei Durchsicht von vorne auftreten. Dies gilt auch, wenn bei diesen Brillengläsern die optische Wirkung für den Fern- und den Nahteil optimiert ist (Bifokal, progressiv) und eine Dickenoptimierung mit Anpassung an die Brillenfassung und eine Anpassung der relativen Lage der Linsenachsen zum Auge durchgeführt wird (Individualgläser).

Bei der Herstellung von Plus-Gläsern (Linsenmitte ist dicker als Linsenrand) und bei Neutral-Gläsern (Linsenmitte ist gleich dick wie Linsenrand) ist darauf zu achten, dass die Dicke der Linsen so weit reduziert wird, wie dies im Hinblick auf die verbleibende Randdicke, das heißt die Dicke am Umfangsrand des fertigen Brillenglases, möglich ist. Die Randdicke muss eingehalten werden, damit die Linse in der Brillenfassung einwandfrei montiert werden kann, das heißt, diese Dicke muss in etwa der Breite des Rahmens der Brillenfassung entsprechen.

Bei Minus-Gläsern (Linsenmitte ist dünner als Linsenrand) wird im Rahmen einer Dickenoptimierung die Dicke der Linsen so weit reduziert, wie dies im Hinblick auf die verbleibende Restdicke in der Linsenmitte möglich ist. Eine gewisse Mindestdicke in der Linsenmitte ist erforderlich, damit die mechanische Stabilität des Brillenglases gewährleistet ist.

Mit dem vorteilhaften Brillenglasrohling ist eine Rezeptfertigung besonders einfach möglich. Wegen der Spezialgeometrie an einer Linsenseite (vorzugsweise Vorderseite) kann auch bei Rezeptfertigung mit halbfertigen Kunststoffrohlingen (Halbfertigteilen) in grober Abstufung gearbeitet werden. Daraus folgt eine Minimierung der Fertigungskosten, da nur eine Seite des Brillenglasrohlings bearbeitet wird und Lagerkosten bei weniger Halbfertigteilen aufgrund der großen Abstufung benötigt werden.

Mit dem vorteilhaften Brillenglasrohling kann 40 bis 50 % an Material eingespart werden.

Der vorteilhafte Brillenglasrohling weist darüber hinaus den Vorteil auf, dass die zu bearbeitende Fläche ca. 30 % kleiner ist als bei den aus der Praxis bekannten Brillenglasrohlingen. Hierdurch verkürzen sich die Bearbeitungszeiten, beispielsweise das Fräsen oder Polieren.

Auch bei der nachfolgenden Beschichtung weist der vorteilhafte Brillenglasrohling den Vorteil auf, dass durch die Ringhalterung der Brillenglasrohling einfach handhabbar ist, und dass eine Automatisierung beim Befüllen von Antireflex-Beschichtungskalotten möglich ist, weil die Ringhalterung auf eine Standardgröße, das heißt einen einheitlichen Durchmesser festgelegt werden kann.

Das erfindungsgemäße Verfahren kann auch mit anderen Brillenglasrohlingen durchgeführt werden.

Beispielsweise können Brillenglasrohlinge verwendet werden, die eine Ringhalterung aus preiswertem Material und ein Linsenelement aus einem teuren Material aufweisen.

Es können auch Brillenglasrohlinge verwendet werden, die eine Ringhalterung aus einem gesonderten Bauteil aufweisen, oder die in einer Ringhalterung eingesetzt werden.

Das erfindungsgemäße Verfahren ist nicht auf spezielle Brillenglasrohlinge beschränkt.

Die erfindungsgemäße Vorrichtung weist den Vorteil auf, dass die Stützvorrichtung sich der Krümmung der Rückseite des optischen Elements anpasst. Die Stützvorrichtung ist flexibel ausgebildet.

Die Zylinderstifte sind in dem Gehäuse derart angeordnet, dass sie gegeneinander axial verschieblich angeordnet sind und gemeinsam mit ihrem oberen Ende an die obere Membran und damit an die Unterseite des optischen Elements angedrückt werden können. Dabei legen die Zylinderstifte entsprechend der Form des optischen Elements unterschiedliche Wege zurück. Die Zylinderstifte werden anschließend in dieser Lage arretiert und stützen damit das optische Element auf der oberen Membran ab. Dadurch ist eine nahezu flächige Abstützung des optischen Elements gegeben.

Die Zylinderstifte können unterschiedliche Querschnitte aufweisen. Sie können runde Querschnitte, vorteilhaft jedoch eckige Querschnitte, wie dreieckige, viereckige oder mehreckige Querschnitte aufweisen.

Das elastische Formteil und die untere Membran bestehen vorteilhaft aus einem elastischen Material. Bei diesem elastischen Material kann es sich zum Beispiel um Gummi geeigneter Härte handeln. Es können auch andere elastische Materialien in Frage kommen.

Die obere Membran im Bereich des optischen Elements dient zum Schutz der Oberfläche des optischen Elements gegen Verkratzen, falls die Zylinderstifte aus Metall ausgeführt sind. Die obere Membran überbrückt gleichzeitig die Lücken zwischen den Zylinderstiften, so dass eine flächige Berührung des optischen Elements ohne Zwischenräume entsteht.

Die obere Membran verhindert auch, dass die bei der Bearbeitung von Brillengläsern verwendeten flüssigen Arbeitsmittel, wie beispielsweise eine Poliersuspension, in den Bereich zwischen den Zylinderstiften gelangt und dort zu Korrosionen oder zu einem Festsetzen der Zylinderstifte führt.

In ihrem Randbereich ist die obere Membran entweder direkt mit dem Gehäuse verbunden oder schließt im Randbereich an den Hohlzylinder, vorzugsweise aus dem gleichen Material, an. Der Hohlzylinder ist vorteilhaft mittels eines ringförmigen Flansches an seinem anderen Ende mit dem Gehäuse verbunden.

Die untere Membran ist vorteilhaft abdichtend in das Gehäuse eingebaut.

Die Unterseite der Membran kann auch mit Druckluft beaufschlagt werden.

Wenn die Rückstellkraft des Elastomers nicht ausreichend ist, kann die Unterseite zusätzlich oder an Stelle des Elastomers mit Druckluft beaufschlagt werden.

Die Federvorrichtung kann aus dem Elastomer und/oder Druckluft bestehen.

Unter dem Einfluss der Druckluft oder des Elastomers biegt sich die untere Membran durch und bewegt die Zylinderstifte in Richtung des optischen Elements. Dort drücken sie die obere Membran zur Abstützung an die Unterseite des Brillenglases und sorgen für ein sicheres Anliegen des optischen Elements oder sorgen für ein sicheres Anliegen der oberen Membran an dem optischen Element, falls dieses beim Einlegen in die Aufnahme bereits Kontakt mit der oberen Membran bekommen hat.

Solange die untere Membran noch nicht mit Druckluft beaufschlagt ist, falls Druckluft verwendet wird, lassen sich die Zylinderstifte beim Einlegen des optischen Elements in die Spannzange leicht nach unten drücken. Wird ein Elastomer verwendet, können die Zylinderstifte entgegen dem Druck der Federvorrichtung ebenfalls nach unten gedrückt werden.

Der Druck der Druckluft oder des Elastomers zum Verschieben der Zylinderstifte wird so gewählt, dass es nicht zu Verbiegungen des optischen Elements kommt, wenn die Zylinderstifte und die obere Membran an diesem abgeformt werden und die Membran dabei die Form eines negativen Abdrucks des optischen Elements annimmt.

Wenn die obere Membran in gewünschter Weise an der Unterseite des optischen Elements anliegt, muss die Position der Zylinderstifte fixiert werden. Wie schon ausgeführt, ist hierzu in dem Gehäuse eine elastische Manschette, vorzugsweise eine Gummimanschette, vorgesehen, welche die Zylinderstifte umgibt und mit Druckluft aufgeblasen werden kann. Sie dehnt sich dabei aus und arretiert die außenliegenden Zylinderstifte.

Da das gesamte aus den Zylinderstiften bestehende Paket zusammengedrückt wird, können sich die Zylinderstifte auch nicht mehr relativ zueinander bewegen, so dass alle Zylinderstifte relativ zum Gehäuse beziehungsweise zum optischen Element fixiert werden. Die Unterstützung des optischen Elements erfolgt dann auf seiner gesamten zentralen Fläche durch die abgeformte obere Membran.

Der besondere Vorteil der erfindungsgemäßen Vorrichtung liegt darin, dass die flächige Unterstützung der zentralen Bereiche der optischen Elemente möglich ist, ohne dass für jede der vielen verschiedenen Oberflächengeometrien speziell geformte Unterstützungselemente erforderlich sind.

Die gemäß der Erfindung vorgesehene Stützvorrichtung kann sich nacheinander jeder beliebigen Geometrie der optischen Elemente anpassen. Die dabei erzeugte Form eines negativen Abdrucks des optischen Elements kann für die Dauer der Bearbeitung fixiert werden. Danach kann eine andere Geometrie erzeugt werden.

Weitere Merkmale und Vorteile der Erfindung ergeben sich anhand der zugehörigen Zeichnungen, in der eine erfindungsgemäße Vorrichtung dargestellt ist, ohne die Erfindung auf diese Ausführungsbeispiele zu beschränken. In den Zeichnungen zeigen:
- Fig. 1: eine erfindungsgemäße Vorrichtung im Längsschnitt;
- Fig. 2: einen Längsschnitt durch einen Brillenglasrohling;
- Fig. 3: ein geändertes Ausführungsbeispiel eines Brillenglasrohlings;
- Fig. 4: ein geändertes Ausführungsbeispiel eines Brillenglasrohlings;
- Fig. 5: ein geändertes Ausführungsbeispiel eines Brillenglasrohlings;
- Fig. 6: ein geändertes Ausführungsbeispiel eines Brillenglasrohlings;
- Fig. 7: ein geändertes Ausführungsbeispiel eines Brillenglasrohlings;
- Fig. 8: ein geändertes Ausführungsbeispiel eines Brillenglasrohlings;
- Fig. 9: ein geändertes Ausführungsbeispiel der erfindungsgemäßen Vorrichtung;
- Fig. 10: ein geändertes Ausführungsbeispiel der oberen Membran im Querschnitt.

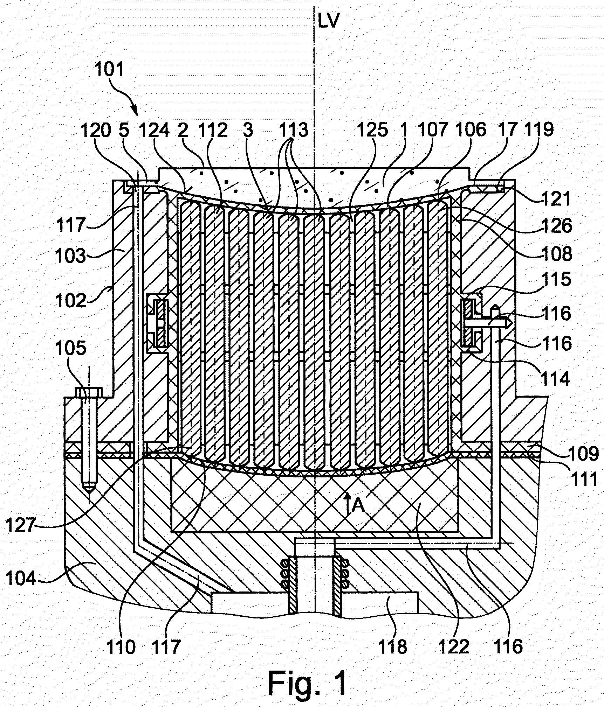

Fig. 1 zeigt eine Vorrichtung 101, in der ein Brillenglasrohling 1 angeordnet ist. Die Vorrichtung 101 weist ein Gehäuse 102 auf mit einem oberen Gehäuseteil 103 und einem unteren Gehäuseteil 104. Die Gehäuseteile 103, 104 sind mit Schrauben 105 miteinander verbunden. In Fig. 1 ist lediglich eine Schraube 105 dargestellt.

In dem Gehäuse 102 ist ein elastisches Formteil 106 angeordnet. Das elastische Formteil 106 ist als Gummiformteil ausgebildet. Das elastische Formteil 106 weist eine obere Membran 107 auf und einen Hohlzylinder 108. Der Hohlzylinder 108 ist ebenfalls aus einem elastischen Material, beispielsweise Gummi ausgebildet. Der Hohlzylinder 108 ist mit der oberen Membran 107 fest verbunden. Der Hohlzylinder 108 weist einen Flansch 109 auf.

Weiterhin ist eine untere Membran 110 vorgesehen, die einen Flansch 111 aufweist. Die Flansche 109 und 111 liegen aneinander und werden durch die Schraubverbindung mit den Schrauben 105 der Gehäuseteile 103 und 104 fest aufeinandergepresst.

Der Hohlzylinder 108, die obere Membran 107 und die untere Membran 110 bilden einen Hohlraum 112. In dem Hohlraum 112 sind Zylinderstifte 113 angeordnet. Die Zylinderstifte sind in axialer Richtung, das heißt in Richtung einer Längsachse LV beweglich.

Für die Arretierung der Zylinderstifte 113 ist eine elastische Manschette 114 vorgesehen. Die elastische Manschette 114 ist vorteilhaft als Gummimanschette ausgebildet. Die elastische Manschette 114 ist in einer Ausnehmung 115 des oberen Gehäuseteils 103 angeordnet. Die Ausnehmung 115 ist als innenliegende Ausnehmung 115 in dem Gehäuse 1023 ausgebildet.

Die elastische Manschette 114 kann mit einem Druckmittel, vorzugsweise Druckluft, beaufschlagt werden. Das Druckmittel wird über Bohrungen 116 der elastischen Manschette 114 zugeführt. Wird die elastische Manschette 114 mit dem Druckmittel, beispielsweise Druckluft, beaufschlagt, wird die elastische Manschette 114 radial nach innen in Richtung der Längsachse LV gedrückt. Die elastische Manschette 114 ist als einseitig offenes Hohlteil ausgebildet, so dass ihr Innenraum über die Bohrungen 116 mit Druckluft beaufschlagt werden kann. Da die elastische Manschette 114 nach oben, unten und außen hin von den Wänden der Ausnehmung 115 abgestützt wird, kann sie sich unter der Einwirkung der Druckluft in gewünschter Weise nur nach innen ausdehnen und hat so die Funktion einer Arretiervorrichtung.

Anstelle von Druckluft kann auch eine anderes Druckmittel, beispielsweise eine Flüssigkeit verwendet werden.

Die Vorrichtung 101 weist darüber hinaus Bohrungen 117 auf. In den Bohrungen 117 und einem Raum 118 wird ein Unterdruck mittels einer Vakuumpumpe (nicht dargestellt) erzeugt. Die Bohrungen 117, von denen in Fig. 1 lediglich eine dargestellt ist, enden in Öffnungen 120 einer Auflage 119. In Fig. 1 ist nur eine Öffnung 120 dargestellt.

Die Öffnungen 120 in der Auflage 119 sind vorteilhaft radialsymmetrisch um die Längsachse LV herum in der Auflage 119 angeordnet. In den Öffnungen 120 wird ein Unterdruck erzeugt. Durch diesen Unterdruck wird eine Ringhalterung 5 des Brillenglasrohlings 1 an der Auflage 119 angesaugt. Um ein Verkratzen des Brillenglasrohlings 1 zu vermeiden, ist in der Auflage 119 eine zusätzliche Gummiauflage 121 angeordnet. Die Öffnung 120 befindet sich in der Gummiauflage 121.

In dem unteren Gehäuseteil 104 ist eine Federvorrichtung 122 in Form eines Elastomers angeordnet. Das Elastomer 122 liegt an der unteren Membran 110 an und übt eine Rückstellkraft in Richtung des Pfeiles A aus.

Die Zylinderstifte 113 werden von der oberen Membran 107 abgedeckt. Die obere Membran 107 wird mit dem Brillenglasrohling 1 in Kontakt gebracht, und zwar mit einer Rückseite 3 des Brillenglasrohlings 1.

Die Zylinderstifte 113 werden durch das Elastomer 122 in Richtung des Pfeiles A gedrückt. Damit drücken die Zylinderstifte 113 die obere Membran 107 an die Rückseite 3 des Brillenglasrohlings 1 an. Wenn die Zylinderstifte 113 in dieser Position fixiert werden, ergibt sich eine nahezu flächige Abstützung des Brillenglasrohlings 1. Die zwischen den Zylinderstiften 113 und dem Brillenglasrohling 1 angeordnete obere Membran 107 aus Gummi oder einem anderen elastischen Material verbessert die Gleichmäßigkeit der Unterstützung noch weiter.

In dem Gehäuse 102 ist eine Stützvorrichtung 123 angeordnet, welche aus den Zylinderstiften 113, der oberen Membran 107, der unteren Membran 110 und dem Hohlzylinder 108 gebildet ist.

Diese Stützvorrichtung legt sich mit der oberen Membran 107 an den Brillenglasrohling von unten an die Rückseite 3 an und stützt diesen ab.

Die obere Membran 107, der Hohlzylinder 108 und der Flansch 109 bilden ein zusammenhängendes Gummiformteil, das als ein Bauteil aus einheitlichem Material, zum Beispiel Gummi, hergestellt wird. Der ringförmige Flansch 109 dient zur Fixierung des Gummiformteils zwischen dem oberen Gehäuseteil 103 und dem unteren Gehäuseteil 104. Der ringförmige Flansch 109 wird zwischen den Gehäuseteilen 103 und 104 festgespannt.

Die Zylinderstifte 113 befinden sich im Inneren des nach unten hin offenen Gummiformteils. Diese Öffnung wird von der unteren Membran 110 verschlossen, die dort die Zylinderstifte 113 abstützt.

Der Hohlzylinder 108 und damit auch die Zylinderstifte 113 werden von der Gummimanschette 114 umspannt. Wird die Gummimanschette 114 mit Druckluft beaufschlagt, dehnt sie sich aus. Dadurch drückt sie den Hohlzylinder 108 und die Zylinderstifte 113 zusammen, wodurch diese arretiert werden.

Die Zylinderstifte 113 weisen ein oberes Ende 126 und ein unteres Ende 127 auf. Die Zylinderstifte 113 liegen mit dem oberen Ende 126 an der oberen Membran 107 an. Die Zylinderstifte 113 liegen mit dem unteren Ende 127 an der unteren Membran 110 an.

Zur Bearbeitung des Brillenglasrohlings wird der Brillenglasrohling 1 in einer Aufnahme 124 der Vorrichtung 101 angeordnet. Der Brillenglasrohling 1 kann zu diesem Zeitpunkt schon durch den Unterdruck in den Öffnungen 120 mit seiner Ringhalterung 5 in der Auflage 119 durch den Unterdruck fixiert werden.

Durch das Elastomer 122 werden die untere Membran 110 und damit die Zylinderstifte 113 und damit wiederum die obere Membran 107 an die Rückseite 3 des Brillenglasrohlings gedrückt. Die Zylinderstifte 113 und die obere Membran 107 nehmen hierbei die Form der Rückseite 3 des Brillenglasrohlings 1 auf. In dieser Position werden die Zylinderstifte 113 durch die elastische Manschette 114 durch Druckluftbeaufschlagung durch die Bohrungen 116 fixiert.

Das Einlegen des Brillenglasrohlings kann auch so erfolgen, dass der Brillenglasrohling 1 in die Aufnahme 124 eingelegt wird und beispielsweise durch den Druck eines Beschickungsroboters die obere Membran 107 und damit die Zylinderstifte 113 gegen die Rückstellkraft der unteren Membran 110 und des Elastomers 122 drückt. In dieser Position werden die Zylinderstifte 113 durch die elastische Manschette 114 zueinander fixiert. Anschließend werden die Öffnungen 120 mit Unterdruck beaufschlagt und der Brillenglasrohling 1 wird in der Auflage 119 und damit in der Aufnahme 124 fixiert.

Das Ausrichten der Zylinderstifte 113 an der Rückseite des Brillenglasrohlings 1, das Erzeugen des Unterdrucks in den Bohrungen 117 und den Öffnungen 120 sowie das Fixieren der Zylinderstifte 113 durch Druckbeaufschlagung der elastischen Manschette 114 kann auch gleichzeitig erfolgen.

Bei einer konvex geformten Rückseite 3 des Brillenglasrohlings 1, wie in Fig. 1 dargestellt, legt sich die obere Membran 107 in der Regel schon beim Einlegen des Brillenglasrohlings 1 in der Aufnahme 124 an die Rückseite 3 des Brillenglasrohlings 1 an. Der Brillenglasrohling 1 schiebt mit der Rückseite 3 die Zylinderstifte 113 etwas nach unten.

Bei konkav geformten Brillenglasrohlingen findet eine solche Berührung beim Einlegen in die Spannzange auch statt, da das Elastomer 122 die untere Membran 110, die Zylinderstifte 113 und die obere Membran 107 in diesem Fall idealerweise über eine Horizontale hinaus in Richtung des Pfeiles A nach oben verschiebt.

Grundsätzlich besteht auch die Möglichkeit, dass der Raum, in dem das Elastomer 122 angeordnet ist, zusätzlich mit Druckluft beaufschlagt wird. In diesem Fall sind zusätzliche Bohrungen (in Fig. 1 nicht dargestellt) vorgesehen, um den Raum, in dem die Federvorrichtung 122 angeordnet ist, mit Druckluft zu beaufschlagen.

Gemäß Fig. 1 sind zwischen den Zylinderstiften 113 Zwischenräume 125 dargestellt. Diese Zwischenräume sind so klein gewählt, dass sich die Zylinderstifte ohne Druckbeaufschlagung auf die elastische Manschette 114 frei verschieblich in Richtung der Längsachse LV bewegen können, und dass sie bei Druckbeaufschlagung aneinander liegen, das heißt aneinandergedrückt werden, so dass die Zylinderstifte 113 zueinander und in dem Gehäuse 102 fixiert werden.

Mit der erfindungsgemäßen Vorrichtung 101 ist es möglich, Brillenglasrohlinge 1 mit unterschiedlich geformten Rückseiten 3 in der Vorrichtung 101 mit der Stützvorrichtung 123 zu lagern, so dass eine hochgenaue Lagerung bei der Bearbeitung, beispielsweise Fräsen, Schleifen und/oder Polieren, einer Frontseite 2 des Brillenglasrohlings 1 durchgeführt werden kann.

In der Vorrichtung 101 ist lediglich die Auflage 119 an einen radial äußeren Teil des Brillenglasrohlings 1 angepasst ausgebildet, so dass verschiedene Brillenglasrohlinge eingelegt werden können. Die Brillenglasrohlinge 1 weisen hierzu vorteilhaft eine Ringhalterung 5 auf. Ist die Ringhalterung 5 plan ausgebildet, beispielsweise als Flansch 17, wie in Fig. 1 dargestellt, können sämtliche Brillenglasrohlinge 1, die diesen Flansch 17 aufweisen, in der Vorrichtung 101 angeordnet und bearbeitet werden.

Die Vorrichtung 101 weist im Gehäuseteil 104 einen Flansch (nicht dargestellt) auf, mit dem die Vorrichtung 101 an Spindeln (nicht dargestellt) von verschiedenen Bearbeitungsmaschinen befestigt werden kann. Diese Spindeln verfügen über Drehdurchführungen und Luftkanäle für die Druckluft und den Unterdruck.

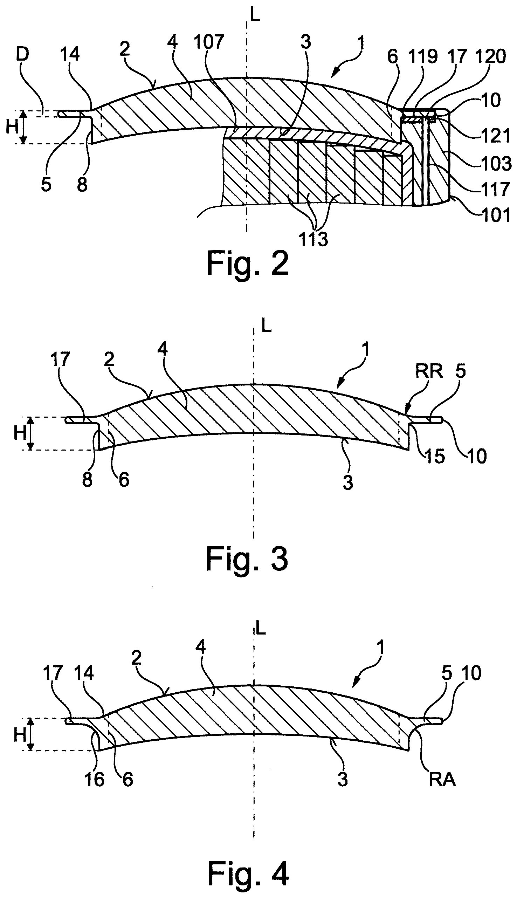

Fig. 2 zeigt den Brillenglasrohling 1 und einen Teil der Vorrichtung 101. Die Vorrichtung 101 weist die Zylinderstifte 113 auf, die die Membran 107 stützen. Die obere Membran 107 liegt an der Rückseite 3 des Brillenglasrohlings 1 an. Der Flansch 17, der die Ringhalterung 5 bildet, liegt in der Auflage 119. In der Auflage 119 ist die Gummiauflage 121 angeordnet. Am Ende der Bohrung 117 ist eine Öffnung 120 vorgesehen. In der Bohrung 117 wird der Unterdruck erzeugt, um den Flansch 17 des Brillenglasrohlings 1 in die Auflage 119 zu ziehen.

In den Fig. 2 bis 8 ist die Vorrichtung 101 nicht dargestellt. Es ist jedoch erkennbar, dass in der Vorrichtung 101 lediglich die Auflage 119 an die verschiedenen Ringhalterungen 5 angepasst werden muss. Sind die Brillenglasrohlinge 1 immer mit derselben Ringhalterung ausgestattet, können sämtliche Brillenglasrohlinge 1 in der Vorrichtung 101 fixiert werden.

Gleiche Teile sind mit gleichen Bezugszeichen versehen.

Gemäß Fig. 2 ist der Brillenglasrohling 1 lediglich schematisch dargestellt. Der Brillenglasrohling 1 weist ein Linsenelement 4 und eine Ringhalterung 5 auf. Die Ringhalterung 5 ist als Flansch 17 ausgebildet. Durch diese Ausbildung als Flansch 17 kann deutlich mehr Material bei der Herstellung des Brillenglasrohlings 1 eingespart werden. Zwischen der Frontseite 2 und dem Flansch 17 ist eine Kante 14 ausgebildet. Zwischen der Ringfläche 8 und dem Flansch 17 ist eine Kante 15 ausgebildet.

Gemäß Fig. 3 ist der Brillenglasrohling 1 mit dem Linsenelement 4 und der Ringhalterung 5 dargestellt. Zwischen der Frontseite 2 und dem Flansch 17 ist ein Radius RR ausgebildet. Zwischen der Ringfläche 8 und dem Flansch 17 ist die Kante 15 ausgebildet.

Gemäß Fig. 4 weist der Brillenglasrohling 1 das Linsenelement 4 und die Ringhalterung 5 auf. Zwischen der Frontseite 2 des Brillenglasrohlings und dem Flansch 17 ist die Kante 14 ausgebildet. Zwischen einer Außenfläche 16 des Linsenelements 4 und dem Flansch 17 ist ein Radius RA ausgebildet.

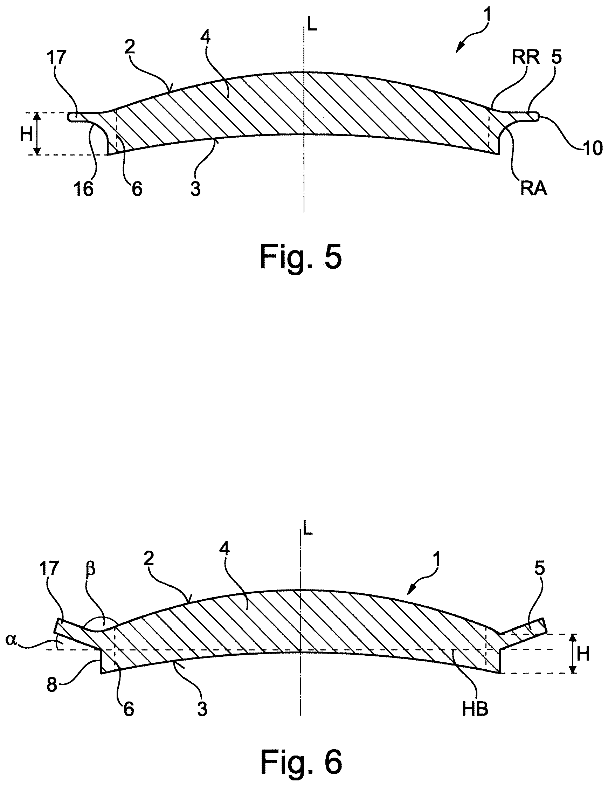

Gemäß Fig. 5 weist das Linsenelement 4 des Brillenglasrohlings 1 den Flansch 17 auf. Zwischen der Frontseite 2 und dem Flansch 17 ist der Radius RR ausgebildet. Zwischen der Außenfläche 16 des Linsenelements 4 und dem Flansch 17 ist der Radius RA ausgebildet.

Gemäß Fig. 6 weist der Brillenglasrohling 1 das Linsenelement 4 und den Flansch 17 auf. Der Brillenglasrohling 1 ist scheibenförmig ausgebildet. Der Brillenglasrohling 1 weist eine Horizontale HB auf. Der Flansch 17 ist gegenüber der Horizontalen HB abgewinkelt angeordnet. Zwischen dem Flansch 17 und der Horizontalen HB wird der Winkel α eingeschlossen. Zwischen dem Flansch 17 und der Frontseite 2 wird der Winkel β eingeschlossen.

Die Flansche 17, die in den Fig. 3 bis 6 dargestellt sind, sind parallel zu der Horizontalen HB ausgerichtet.

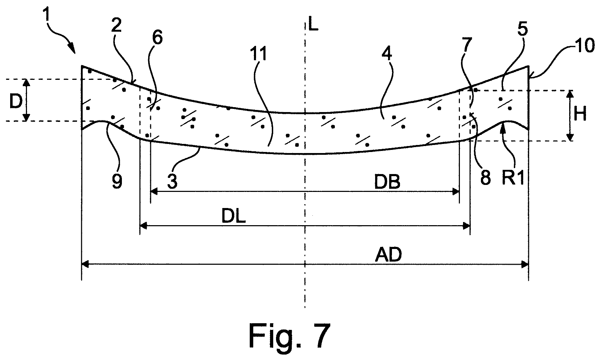

Fig. 7 zeigt einen Brillenglasrohling 1, der eine Frontseite 2 aufweist und eine Rückseite 3. Die Rückseite 3 ist eine fertig gegossene Seite, die bis auf möglicherweise Polier- oder Beschichtungsverfahren nicht weiterbearbeitet wird. Die Frontseite 2 wird mit spannehmenden Verfahren, wie beispielsweise einem Fräsverfahren, gemäß einem Rezept bearbeitet.

Der Brillenglasrohling 1 weist ein Linsenelement 4 und eine Ringhalterung 5 auf. Eine Konturlinie 6 begrenzt das fertige Brillenglas. Eine Konturlinie 7 begrenzt einen inneren Bereich, nämlich das Linsenelement 4, der innerhalb der Ringhalterung 5 angeordnet ist. Zwischen dem Linsenelement 4 und der Ringhalterung 5 ist eine in radialer Richtung das Linsenelement 4 begrenzende Ringfläche 8 angeordnet.

In dem Brillenglasrohling 1 ist die Ringfläche 8 eine Art fiktive Fläche. Wird nach dem Bearbeiten der Frontseite 2 des Brillenglasrohlings 1 die Ringhalterung 5 entfernt, bildet die Ringfläche 8 eine Außenfläche des Linsenelements 4.

Der Brillenglasrohling 1 ist im Wesentlichen scheibenförmig ausgebildet. Der Brillenglasrohling 1 weist eine Längsachse L auf.

In der Ringhalterung 5 des Brillenglasrohlings 1 ist eine Einbuchtung 9 angeordnet. Die Einbuchtung 9 ist auf der Rückseite 3 des Brillenglasrohlings 1 angeordnet. Es handelt sich hierbei um die von einem Gießvorgang fertiggestellte Seite des Brillenglasrohlings 1.

Die Einbuchtung 9 weist einen Radius R1 auf. Das bedeutet, die Einbuchtung 9 ist im Querschnitt teilkreisförmig ausgebildet. Das Linsenelement 4 und die Ringhalterung 5 sind aus ein und demselben Material hergestellt, beispielsweise aus Glas oder Kunststoff.

Zur Herstellung eines Brillenglases aus dem Brillenglasrohling 1 wird die Frontseite 2 des Brillenglasrohlings bearbeitet. Die Bearbeitung erfolgt beispielsweise in einer CNC-gesteuerten Maschine (nicht dargestellt). Beispielsweise wird mittels eines Fräsers die Frontseite 2 abgetragen, bis eine sogenannte Rezeptfläche entsteht. Nach den Bearbeitungsvorgängen, wie Fräsen, Drehen, Schleifen, Feinschleifen und/oder Polieren, wird die Ringhalterung 5 ebenfalls abgefräst, und zwar bis zu der Konturlinie 7 des inneren Bereichs. Hierdurch bleibt genügend Material an dem Linsenelement 4, um dieses später in eine Brillenfassung einzupassen.

Durch die Ausbildung der Einbuchtung 9 kann Material des Brillenglasrohlings 1 bei dessen Herstellung eingespart werden. Die Ringhalterung 5 weist an der schmalsten Stelle, gebildet durch die Einbuchtung 9, eine Dicke D auf.

Die Ringfläche 8 weist eine Höhe H auf.

Die Höhe H der Ringfläche 8 des Linsenelements 4 ist größer als die Dicke D der Ringhalterung 5 an der schmalsten Stelle.

Die schmalste Stelle wird gemäß Fig. 1 im Bereich der Einbuchtung 9 gebildet.

Die Ringhalterung 5 weist damit eine Dicke D auf, die wenigstens teilweise kleiner ist als die Höhe H der Ringfläche.

Durch diese Ausbildung des Brillenglasrohlings 1 lässt sich erheblich an Material einsparen.

Wichtig ist, dass der Brillenglasrohling 1 eine Außenfläche 10 aufweist, mit der der Brillenglasrohling 1 in einer Bearbeitungsvorrichtung gespannt werden kann. Der Brillenglasrohling 1 wird beispielsweise mit der Außenfläche 10 in einem Spannfutter einer CNC-gesteuerten Bearbeitungsvorrichtung eingespannt (nicht dargestellt).

Das fertige Brillenglas 11 weist einen Durchmesser DB auf. Das Linsenelement 4 weist einen Durchmesser DL auf. Das Linsenelement 4 weist gegenüber dem Brillenglas 11 einen größeren Durchmesser auf, damit dieses in eine Brillenfassung eingepasst werden kann.

Der gesamte Brillenglasrohling 1 weist einen Außendurchmesser AD auf.

Der Brillenglasrohling 1 mit dem Linsenelement 4 und der Ringhalterung 5 ist als gegossener Brillenglasrohling 1 ausgebildet. Das Linsenelement 4 und die Ringhalterung 5 sind einstückig ausgebildet. Besonders vorteilhaft wird der Brillenglasrohling 1 mit dem Linsenelement 4 und der Ringhalterung 5 als ein in einem Gießvorgang gegossener Brillenglasrohling 1 ausgebildet.

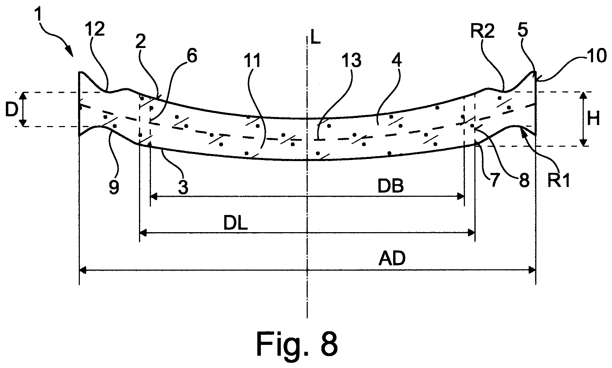

Gemäß Fig. 8 weist die Ringhalterung 5 an der Frontseite 2 zusätzlich eine Einbuchtung 12 auf. Diese Einbuchtung 12 weist einen Radius R2 auf.

Das bedeutet, dass der Brillenglasrohling 1 gemäß Fig. 8 zwei Einbuchtungen 9, 12 aufweist, wodurch die Materialersparnis noch deutlich erhöht wird.

Gemäß Fig. 2 wird der Brillenglasrohling 1 auf der Frontseite 2 bis auf eine Konturlinie 13 abgefräst, so dass entlang der Konturlinie 13 eine sogenannte Rezeptfläche entsteht.

Die verschiedenen Ausführungsformen lassen sich beliebig miteinander kombinieren.

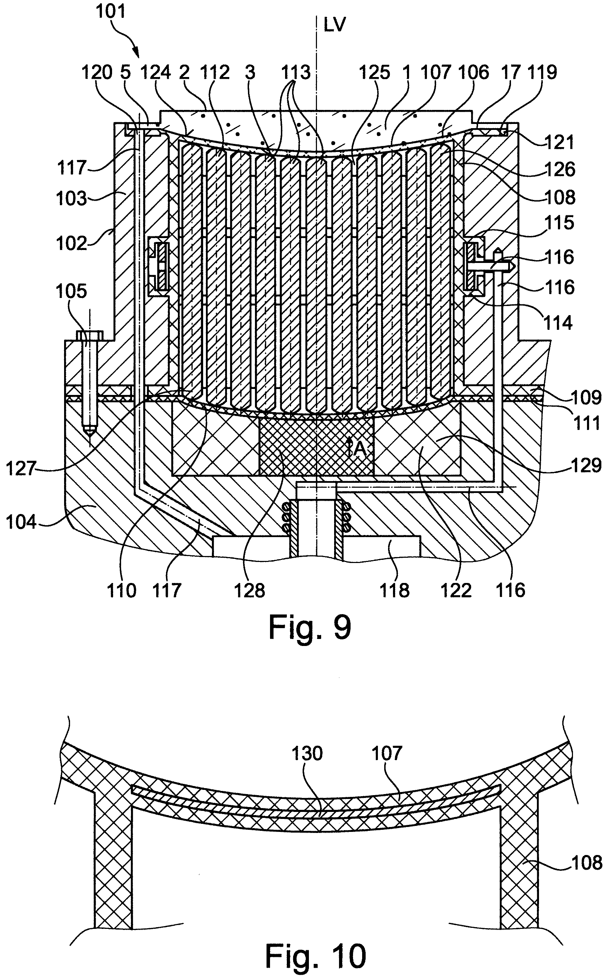

Fig. 9 zeigt ein geändertes Ausführungsbeispiel. Die Federvorrichtung 122, die vorzugsweise als Elastomer ausgebildet ist, weist einen Bereich 128 auf, der weicher ausgebildet ist als ein Bereich 129. Das bedeutet, dass die Federvorrichtung 122 in der Mitte einen Bereich 128 aufweist, der weicher ist als der Randbereich 129.

Die Federvorrichtung 122, vorzugsweise das Elastomer, kann aus verschiedenen Segmenten unterschiedlicher Härte zusammengesetzt sein. Es kann auch ein kontinuierlicher oder diskontinuierlicher Übergang der verschiedenen Härtebereiche vorgesehen sein.

Es ist auch möglich, mindestens zwei Härtebereiche der Federvorrichtung 122 vorzusehen.

Gemäß Fig. 10 ist in der oberen Membran 107 ein Gewebe 130 angeordnet. Das Gewebe 130 dient dazu, dass die Kraftübertragung der einzelnen Zylinderstifte 113 auf den Brillenglasrohling 1 flächig ausgebildet ist. Es wird das Gewebe 130 innerhalb der oberen Membran 107 angeordnet.

Das Gewebe 130 erzeugt eine Versteifung der Membran 107, um eine punktförmige Krafteinleitung von einzelnen Zylinderstiften zu vermeiden. Die Krafteinleitung der Zylinderstifte 113 auf den Brillenglasrohling 1 ist vorteilhaft flächenförmig, da hierdurch die Bearbeitung des Brillenglasrohlings 1 mit einem qualitativ höherwertigen Ergebnis durchgeführt werden kann.

Das Gewebe 130 kann aus Kunststoff oder aus Metall ausgebildet sein, beispielsweise als Drahtgeflecht.

Wesentlicher Vorteil der Erfindung ist, dass durch die verringerte Dicke D der Ringhalterung 5 eine Materialersparnis bei der Herstellung des Brillenglasrohlings 1 erzielt wird.

### Bezugszahlen

- 1: optisches Element (Brillenglasrohling)
- 2: Frontseite
- 3: Rückseite
- 4: Linsenelement
- 5: Ringhalterung
- 6: Konturlinie fertiges Brillenglas
- 7: Konturlinie innerer Bereich
- 8: Ringfläche des Linsenelements
- 9: Einbuchtung
- 10: Außenfläche des Brillenglasrohlings
- 11: Brillenglas
- 12: Einbuchtung
- 13: Konturlinie
- 14: Kante
- 15: Kante
- 16: Außenfläche
- 17: Flansch
- 101: Vorrichtung
- 102: Gehäuse
- 103: oberes Gehäuseteil
- 104: unteres Gehäuseteil
- 105: Schrauben
- 106: elastisches Formteil
- 107: obere Membran
- 108: Hohlzylinder
- 109: Flansch
- 110: untere Membran
- 111: Flansch
- 112: Hohlraum
- 113: Zylinderstifte
- 114: elastische Manschette (Gummimanschette)
- 115: Ausnehmung
- 116: Bohrungen
- 117: Bohrungen
- 118: Raum
- 119: Auflage
- 120: Öffnungen
- 121: Gummiauflage
- 122: Federvorrichtung (Elastomer)
- 123: Stützvorrichtung
- 124: Aufnahme
- 125: Zwischenräume
- 126: oberes Ende der Zylinderstifte
- 127: unteres Ende der Zylinderstifte
- 128: weicher Bereich der Federvorrichtung (Elastomer)
- 129: harter Bereich der Federvorrichtung (Elastomer)
- 130: Gewebe

- A: Pfeil
- AD: Außendurchmesser
- D: Dicke
- DB: Durchmesser Brillenglas
- DL: Durchmesser Linsenelement
- H: Höhe der Ringfläche 8
- HB: Horizontale des Brillenglasrohlings
- L: Längsachse
- LV: Längsachse Vorrichtung
- R1: Radius
- R2: Radius
- RA: Radius Außenfläche
- RR: Radius Rückseite
- α: Winkel
- β: Winkel

## Patentansprüche

1. Vorrichtung zum Bearbeiten von optischen Elementen mit optisch wirksamen Oberflächen, welche ein Gehäuse mit einer Aufnahme für die optischen Elemente aufweist, wobei das Gehäuse in einem oberen Teil die Aufnahme für das optische Element aufweist und in einem unteren Teil eine Vorrichtung zur Befestigung an einer Werkstückspindel einer Bearbeitungsvorrichtung, bei der im Inneren des Gehäuses eine Stützvorrichtung für das optische Element mit axial beweglichen Stiften vorgesehen ist, bei der für die Stützvorrichtung wenigstens eine Arretiervorrichtung vorgesehen ist,
**dadurch gekennzeichnet , dass** das Gehäuse (102) in dem oberen Gehäuseteil (103) außerhalb der Stützvorrichtung (123) eine Auflage (119) aufweist, dass in der Auflage (119) wenigstens eine Öffnung (120) angeordnet ist, und dass eine Vakuumpumpe vorgesehen ist, die mit der wenigstens einen Öffnung (120) verbunden ist.

2. Vorrichtung nach Anspruch 1, **dadurch gekennzeichnet, dass** die Auflage (119) als Auflage (119) für einen radial äußeren Teil des optischen Elements (1) ausgebildet ist.

3. Vorrichtung nach Anspruch 1 oder 2, **dadurch gekennzeichnet, dass** die Auflage (119) als eine Auflage (119) für einen Haltering des optischen Elements (1) ausgebildet ist.

4. Vorrichtung nach Anspruch 2 oder 3, **dadurch gekennzeichnet, dass** die Auflage (119) als formschlüssige Auflage (119) für den radial äußeren Teil des optischen Elements (1) ausgebildet ist.

5. Vorrichtung nach einem der vorhergehenden Ansprüche, **dadurch gekennzeichnet, dass** die Auflage (119) für das optische Element (1) eine zusätzliche Gummi- oder Kunststoffauflage (121) aufweist.

6. Vorrichtung nach einem der vorhergehenden Ansprüche, **dadurch gekennzeichnet, dass** die Stützvorrichtung (123) ein elastisches Formteil (106) aufweist, in dem mehrere Zylinderstifte (113) angeordnet sind, dass das elastische Formteil (106) eine obere Membran (107) und einen mit der oberen Membran (107) verbundenen Hohlzylinder (108) aufweist, dass die Zylinderstifte (113) in dem Hohlzylinder (108) angeordnet sind, dass die Zylinderstifte (113) in Richtung der Aufnahme (124) für das optische Element (1) ein oberes Ende (126) und ein unteres Ende (127) aufweisen, dass die unteren Enden (127) der Zylinderstifte (113) an einer unteren Membran (110) der Stützvorrichtung (123) anliegend angeordnet sind, dass radial um den Hohlzylinder (108) des elastischen Formteils (106) herum eine elastische Manschette (114) als Arretiervorrichtung angeordnet ist, welche mit einer Zuführungseinrichtung (116) für ein Druckmittel verbunden ist, und dass die untere Membran (110) auf einer in dem Gehäuse (102) angeordneten Federvorrichtung (122) angeordnet ist.

7. Vorrichtung nach Anspruch 6, **dadurch gekennzeichnet, dass** die Federvorrichtung (122) als Elastomer ausgebildet ist.

8. Vorrichtung nach Anspruch 6 oder 7, **dadurch gekennzeichnet, dass** die Federvorrichtung (122) über eine gesamte radiale Ausdehnung ein konstantes Elastizitätsmodul aufweist, oder dass die Federvorrichtung (122) in radialer Richtung unterschiedliche Elastizitätsmodule aufweist.

9. Vorrichtung nach einem der Ansprüche 6, 7 oder 8, **dadurch gekennzeichnet, dass** die Zylinderstifte (113) mit ihrem oberen Ende (126) an der oberen Membran (107) des elastischen Formteils (106) angeordnet sind.

10. Vorrichtung nach einem der Ansprüche 6, 7 oder 8, **dadurch gekennzeichnet, dass** die elastische Manschette (114) in einer innenliegenden Ausnehmung (115) des Gehäuses (102) angeordnet ist.

11. Vorrichtung nach einem der vorhergehenden Ansprüche, **dadurch gekennzeichnet, dass** in der oberen Membran (107) ein Gewebe (130) angeordnet ist.

12. Vorrichtung nach einem der vorhergehenden Ansprüche, **dadurch gekennzeichnet, dass** das Gehäuse (102) aus einem oberen Gehäuseteil (103) und einem unteren Gehäuseteil (104) gebildet ist, dass beide Gehäuseteile (103, 104) mittels einer Schraubverbindung miteinander verbunden sind, dass in dem Gehäuse (102) Bohrungen (117) für die Erzeugung eines Unterdrucks in der Auflage (119) für das optische Element (1) vorgesehen sind, und dass in dem Gehäuse (102) Bohrungen (116) für die Erzeugung eines Überdrucks für die Arretiervorrichtung vorgesehen sind.

13. Verfahren zum Bearbeiten von optischen Elementen mit einer Vorrichtung gemäß Anspruch 1, **dadurch gekennzeichnet,**
- **dass** das optische Element (1) auf der oberen Membran (107) angeordnet wird,
- **dass** die Zylinderstifte (113) der Stützvorrichtung (123) die obere Membran (107) aufgrund der Federvorrichtung (122) an das optische Element (1) drücken,
- **dass** die Zylinderstifte (113) der Stützvorrichtung (123) mit der Arretiervorrichtung durch Aufbringen von Druck auf die elastische Manschette (114) fixiert werden,
- **dass** in der wenigstens einen Öffnung (120) der Auflage (119) durch die Vakuumpumpe ein Unterdruck erzeugt wird, und
- **dass** das optische Element (1) bearbeitet wird.

14. Verfahren nach Anspruch 13, **dadurch gekennzeichnet, dass** das optische Element (1) als Brillenglasrohling ausgebildet ist, der aus einem Linsenelement (4) und einer Ringhalterung (5) gebildet ist, bei dem das Linsenelement (4) und die Ringhalterung (5) aus demselben Material gebildet sind, bei dem zwischen dem Linsenelement (4) und der Ringhalterung (5) eine das Linsenelement (4) in radialer Richtung begrenzende Ringfläche (8) mit einer Höhe (H) ausgebildet ist, und bei dem die Ringhalterung (5) eine Dicke (D) aufweist, die wenigstens teilweise kleiner ist als die Höhe (H) der Ringfläche (8).

15. Verfahren nach einem der Ansprüche 13 oder 14, **dadurch gekennzeichnet, dass** der Brillenglasrohling (1) mit der Ringhalterung (5) und dem Linsenelement (4) als gegossener Brillenglasrohling (1) und/oder als einstückiger Brillenglasrohling (1) ausgebildet ist.

16. Verfahren nach einem der Ansprüche 13 bis 15, **dadurch gekennzeichnet, dass** die Dicke (D) der Ringhalterung (5) über eine gesamte radiale Erstreckung der Ringhalterung (5) kleiner ist als die Höhe (H) der Ringfläche (8) zwischen dem Linsenelement (4) und der Ringhalterung (5), und/oder dass die Ringhalterung (5) als Flansch (17) ausgebildet ist.

17. Verfahren nach einem der Ansprüche 13 bis 16, **dadurch gekennzeichnet, dass** die Ringhalterung (5) auf wenigstens einer Seite wenigstens eine Einbuchtung (9, 12) aufweist, oder dass auf einer oder beiden Seiten (2, 3) des Brillenglasrohlings (1) zwischen dem Linsenelement (4) und der Ringhalterung (5) ein Radius (RA, RR) ausgebildet ist, oder dass auf einer oder beiden Seiten (2, 3) des Brillenglasrohlings (1) zwischen dem Linsenelement (4) und der Ringhalterung (5) eine Kante (14, 15) ausgebildet ist.

## Geänderte Patentansprüche

### Geänderte Patentansprüche gemäss Regel 137(2) EPÜ.

1. Vorrichtung (101) zum Bearbeiten von optischen Elementen (1) mit optisch wirksamen Oberflächen, welche ein Gehäuse (102) mit einer Aufnahme für die optischen Elemente (1) aufweist, wobei das Gehäuse (102) in einem oberen Teil (103) die Aufnahme für das optische Element (1) aufweist und in einem unteren Teil (104) eine Vorrichtung zur Befestigung an einer Werkstückspindel einer Bearbeitungsvorrichtung, bei der im Inneren des Gehäuses (102) eine Stützvorrichtung (123) für das optische Element (1) mit axial beweglichen Stiften (113) vorgesehen ist, bei der für die Stützvorrichtung (123) wenigstens eine Arretiervorrichtung vorgesehen ist,
**dadurch gekennzeichnet, dass** das Gehäuse (102) in dem oberen Gehäuseteil (103) außerhalb der Stützvorrichtung (123) eine Auflage (119) aufweist, dass in der Auflage (119) wenigstens eine Öffnung (120) angeordnet ist, und dass eine Vakuumpumpe vorgesehen ist, die mit der wenigstens einen Öffnung (120) verbunden ist.

2. Vorrichtung nach Anspruch 1, **dadurch gekennzeichnet, dass** die Auflage (119) als Auflage (119) für einen radial äußeren Teil des optischen Elements (1) ausgebildet ist.

3. Vorrichtung nach Anspruch 1 oder 2, **dadurch gekennzeichnet, dass** die Auflage (119) als eine Auflage (119) für einen Haltering des optischen Elements (1) ausgebildet ist.

4. Vorrichtung nach Anspruch 2 oder 3, **dadurch gekennzeichnet, dass** die Auflage (119) als formschlüssige Auflage (119) für den radial äußeren Teil des optischen Elements (1) ausgebildet ist.

5. Vorrichtung nach einem der vorhergehenden Ansprüche, **dadurch gekennzeichnet, dass** die Auflage (119) für das optische Element (1) eine zusätzliche Gummi- oder Kunststoffauflage (121) aufweist.

6. Vorrichtung nach einem der vorhergehenden Ansprüche, **dadurch gekennzeichnet, dass** die Stützvorrichtung (123) ein elastisches Formteil (106) aufweist, in dem mehrere Zylinderstifte (113) angeordnet sind, dass das elastische Formteil (106) eine obere Membran (107) und einen mit der oberen Membran (107) verbundenen Hohlzylinder (108) aufweist, dass die Zylinderstifte (113) in dem Hohlzylinder (108) angeordnet sind, dass die Zylinderstifte (113) in Richtung der Aufnahme (124) für das optische Element (1) ein oberes Ende (126) und ein unteres Ende (127) aufweisen, dass die unteren Enden (127) der Zylinderstifte (113) an einer unteren Membran (110) der Stützvorrichtung (123) anliegend angeordnet sind, dass radial um den Hohlzylinder (108) des elastischen Formteils (106) herum eine elastische Manschette (114) als Arretiervorrichtung angeordnet ist, welche mit einer Zuführungseinrichtung (116) für ein Druckmittel verbunden ist, und dass die untere Membran (110) auf einer in dem Gehäuse (102) angeordneten Federvorrichtung (122) angeordnet ist.

7. Vorrichtung nach Anspruch 6, **dadurch gekennzeichnet, dass** die Federvorrichtung (122) als Elastomer ausgebildet ist.

8. Vorrichtung nach Anspruch 6 oder 7, **dadurch gekennzeichnet, dass** die Federvorrichtung (122) über eine gesamte radiale Ausdehnung ein konstantes Elastizitätsmodul aufweist.

9. Vorrichtung nach Anspruch 6 oder 7, **dadurch gekennzeichnet, dass** die Federvorrichtung (122) in radialer Richtung unterschiedliche Elastizitätsmodule aufweist.

10. Vorrichtung nach einem der Ansprüche 6, 7, 8 oder 9, **dadurch gekennzeichnet, dass** die Zylinderstifte (113) mit ihrem oberen Ende (126) an der oberen Membran (107) des elastischen Formteils (106) angeordnet sind.

11. Vorrichtung nach einem der Ansprüche 6, 7, 8 oder 9, **dadurch gekennzeichnet, dass** die elastische Manschette (114) in einer innenliegenden Ausnehmung (115) des Gehäuses (102) angeordnet ist.

12. Vorrichtung nach einem der Ansprüche 6, 7, 8, 9, 10 oder 11, **dadurch gekennzeichnet, dass** in der oberen Membran (107) ein Gewebe (130) angeordnet ist.

13. Vorrichtung nach einem der vorhergehenden Ansprüche, **dadurch gekennzeichnet, dass** das Gehäuse (102) aus einem oberen Gehäuseteil (103) und einem unteren Gehäuseteil (104) gebildet ist, dass beide Gehäuseteile (103, 104) mittels einer Schraubverbindung miteinander verbunden sind, dass in dem Gehäuse (102) Bohrungen (117) für die Erzeugung eines Unterdrucks in der Auflage (119) für das optische Element (1) vorgesehen sind, und dass in dem Gehäuse (102) Bohrungen (116) für die Erzeugung eines Überdrucks für die Arretiervorrichtung vorgesehen sind.

14. Verfahren zum Bearbeiten von optischen Elementen (1) mit einer Vorrichtung (101) gemäß Anspruch 1 und Anspruch 6, **dadurch gekennzeichnet,**
- **dass** das optische Element (1) auf der oberen Membran (107) angeordnet wird,
- **dass** die Zylinderstifte (113) der Stützvorrichtung (123) die obere Membran (107) aufgrund der Federvorrichtung (122) an das optische Element (1) drücken,
- **dass** die Zylinderstifte (113) der Stützvorrichtung (123) mit der Arretiervorrichtung durch Aufbringen von Druck auf die elastische Manschette (114) fixiert werden,
- **dass** in der wenigstens einen Öffnung (120) der Auflage (119) durch die Vakuumpumpe ein Unterdruck erzeugt wird, und
- **dass** das optische Element (1) bearbeitet wird.

15. Verfahren nach Anspruch 14, **dadurch gekennzeichnet, dass** das optische Element (1) als Brillenglasrohling ausgebildet ist, der aus einem Linsenelement (4) und einer Ringhalterung (5) gebildet ist, bei dem das Linsenelement (4) und die Ringhalterung (5) aus demselben Material gebildet sind, bei dem zwischen dem Linsenelement (4) und der Ringhalterung (5) eine das Linsenelement (4) in radialer Richtung begrenzende Ringfläche (8) mit einer Höhe (H) ausgebildet ist, und bei dem die Ringhalterung (5) eine Dicke (D) aufweist, die wenigstens teilweise kleiner ist als die Höhe (H) der Ringfläche (8).

16. Verfahren nach Anspruch 15, **dadurch gekennzeichnet, dass** der Brillenglasrohling (1) mit der Ringhalterung (5) und dem Linsenelement (4) als gegossener Brillenglasrohling (1) und/oder als einstückiger Brillenglasrohling (1) ausgebildet ist.

17. Verfahren nach einem der Ansprüche 15 oder 16, **dadurch gekennzeichnet, dass** die Dicke (D) der Ringhalterung (5) über eine gesamte radiale Erstreckung der Ringhalterung (5) kleiner ist als die Höhe (H) der Ringfläche (8) zwischen dem Linsenelement (4) und der Ringhalterung (5), und/oder dass die Ringhalterung (5) als Flansch (17) ausgebildet ist.

18. Verfahren nach einem der Ansprüche 15 bis 17, **dadurch gekennzeichnet, dass** die Ringhalterung (5) auf wenigstens einer Seite wenigstens eine Einbuchtung (9, 12) aufweist, oder dass auf einer oder beiden Seiten (2, 3) des Brillenglasrohlings (1) zwischen dem Linsenelement (4) und der Ringhalterung (5) ein Radius (RA, RR) ausgebildet ist, oder dass auf einer oder beiden Seiten (2, 3) des Brillenglasrohlings (1) zwischen dem Linsenelement (4) und der Ringhalterung (5) eine Kante (14, 15) ausgebildet ist.
